# EUROPEAN PATENT APPLICATION

(11) **EP 1 137 278 A2**
(43) Date of publication of application: **26.09.2001**
(21) Application number: 01302539.0
(22) Date of filing: 20.03.2001
(51) Int. Cl.: H04N 5/92

(54) **Video information processing apparatus and method**

(30) Priority: 23.03.2000 JP 2000081364
(71) Applicant: SONY CORPORATION, Tokyo 141 (JP)
(72) Inventor: Kotani, Yasutaka, Shinagawa-ku, Tokyo 141 (JP); Tauchi, Yoichiro, Shinagawa-ku, Tokyo 141 (JP); Yamamura, Takaya, Shinagawa-ku, Tokyo 141 (JP); Nakamatsu, Keita, Shinagawa-ku, Tokyo 141 (JP)
(74) Representative: Pratt, Richard Wilson

(57) **Abstract**

An information processing apparatus includes a time-division multiplexer for time-division multiplexing data concerning a first video signal. An adding unit adds beginning information to the data which is time-division multiplexed by the time-division multiplexer, in which the beginning information indicates the beginning of the data. A bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.

## Description

### BACKGROUND OF THE INVENTION

### 1. Field of the Invention

The present invention relates to information processing apparatuses, information processing methods, and recording media.

Embodiments of the invention relate to an information processing apparatus, an information processing method, and a recording medium, in which erroneous detection of a sync pattern indicating the head of a packet is prevented.

### 2. Description of the Related Art

Household videocassette recorders (VCRs) compress and record digital broadcasting program data on recording media and decompress and output (read) compressed data. Such VCRs perform time-division multiplexing of, for example, audio/video (AV) data and sub-codes in standard definition (SD) signals, which are used in digital standard definition televisions (SDTVs), thereby generating packets so that the packets can be recorded on Magnetic tapes and the like.

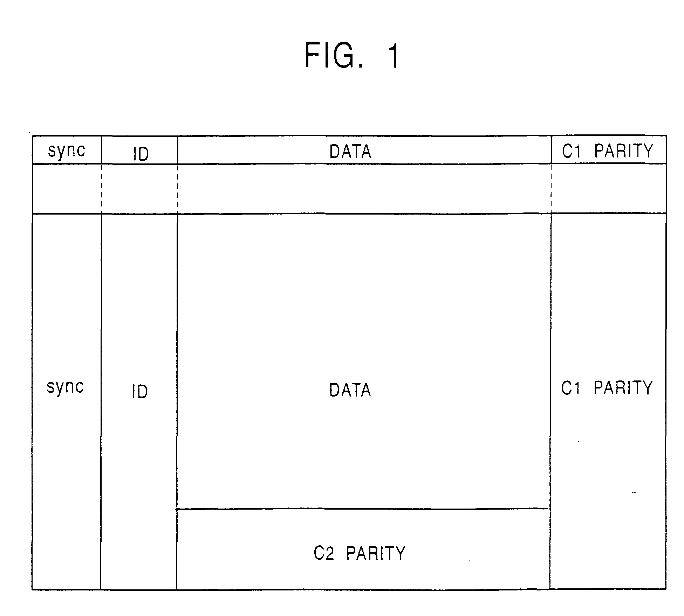

Fig. 1 shows the structure of a packet generated by a VCR. A sync pattern of about 2 bytes, which indicates the head of the packet, and an ID of about 3 bytes, which includes address information on data, are added to the packet. In addition, redundant information, such as a C1 parity which is an error correction code for detecting recording and reading errors and a C2 parity which is an error correction code for detecting burst errors, is also added to the packet. The C1 parity may be referred to as an inner parity, and the C2 parity may be referred to as an outer parity.

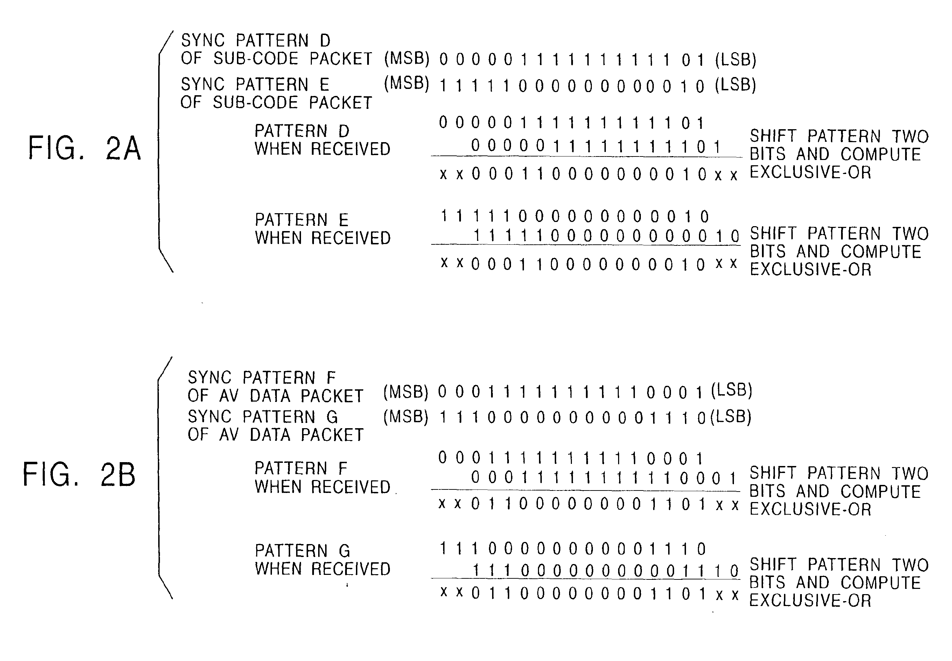

For example, packets for commercialized household digital VCRs can be classified into two types, i.e., a 12-byte sub-code packet including a 2-byte sync pattern, and a 90-byte AV data packet including a 2-byte sync pattern. Figs. 2A and 2B show the respective sync patterns.

Referring to Fig. 2A, a sync pattern D "00000111111111101" and a sync pattern E "11111000000000010", which is an inverted signal of the sync pattern D, are used as sub-code syncs at the head of a sub-code packet. Ten l's or ten 0's are repeated in the respective patterns. In this way, erroneous detection of data bits and sync patterns is prevented since the number of consecutive 0's is restricted in the data bits.

When a packet with the sync pattern D is received and decoded by a household digital VCR, it is assumed that partial response class-4 (PR4) is used to detect a sync pattern indicating the head of the packet. Specifically, a received sync pattern of the sync pattern D is "xx000110000000010xx" (x represents undefined data), which is the exclusive-OR of the sync pattern D and a 2-bit-delayed sync pattern D. A received sync pattern of the pattern E is "xx000110000000010xx", which is the exclusive-OR of the sync pattern E and a 2-bit-delayed sync pattern E. These two received sync patterns are identical bit patterns.

Referring to Fig. 2B, a sync pattern F "00011111111110001" and a sync pattern G "11100000000001110", which is an inverted signal of the sync pattern F, are used as AV data syncs at the head of an AV data packet. As in the patterns shown in Fig. 2A, a received sync pattern corresponding to the sync pattern F is "xx011000000001101xx", which is the exclusive-OR of the sync pattern F and a 2-bit-delayed sync pattern F. A received sync pattern corresponding to the sync pattern G is "xx011000000001101xx", which is the exclusive-OR of the sync pattern G and a 2-bit-delayed sync pattern G.

When recording high definition (HD) signals used in high definition televisions (HDTVs) for next-generation digital broadcasting, HD signals are time-division multiplexed in order to generate packets so that the HD signals can be recorded on a magnetic tape or the like. When generating packets, the sync patterns defined by the SD system, as shown in Figs. 2A and 2B, are used as sync patterns to be added to the packets.

When the sync patterns defined by the SD system, which are illustrated in Figs. 2A and 2B, are used to perform time-division multiplexing of an HD signal, error may result when the HD signal is decoded because it is difficult to discriminate between a sync pattern of an HD signal and a sync pattern of an SD signal.

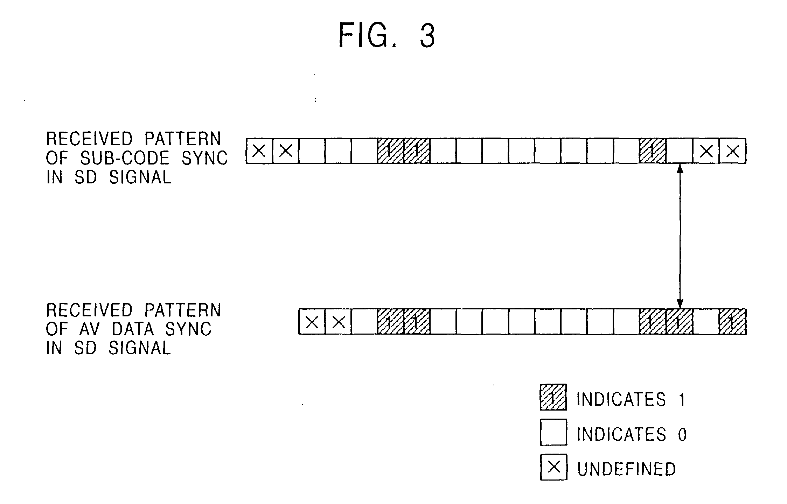

Referring to Fig. 3, a received pattern of a sub-code sync and a received pattern of an AV-data sync are compared with each other. Taking undefined bits into consideration, when the number of corresponding bits is the maximum, the received pattern of the sub-code sync and the received pattern of the AV-code sync differ from each other by only one bit. If this one bit is erroneously detected, the sync pattern is also erroneously detected. When the signal is decoded, error may result.

### SUMMARY OF THE INVENTION

An embodiment of the present invention seeks to prevent erroneous detection of a sync pattern indicating the head of a packet by adding sync patterns to packets, so that a received pattern of one sync pattern and a received pattern of another sync pattern differ from each other by two bits.

According to an aspect of the present invention, an information processing apparatus is provided including a time-division multiplexer for time-division multiplexing data concerning a first video signal. An adding unit adds beginning information to the data which is time-division multiplexed by the time-division multiplexer, in which the beginning information indicates the beginning of the data. A bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.

A difference between the number of bits indicating 1 and the number of bits indicating 0 in the beginning information may be equal to a difference between the number of bits indicating 1 and the number of bits indicating 0, respectively, in the two types of information indicating the beginning of the plurality of pieces of data concerning the second video signal.

The beginning information may include one of "01011111111110000" and the inverted pattern thereof or one of "10011111111110000" and the inverted pattern thereof.

The first video signal may be a high-definition video signal. The second video signal may be a standard-definition video signal.

The time-division multiplexer may perform time-division multiplexing of a plurality of pieces of data concerning the first video signal and an audio signal. The adding unit may add first beginning information to the head of a first piece of the plurality of pieces of data multiplexed by the time-division multiplexer, in which the first beginning information indicates the beginning of the first piece of data. The adding unit may add second beginning information to the head of a second piece of the plurality of pieces of data, in which the second beginning information indicates the beginning of the second piece of data. A first bit string and a second bit string, which are obtained by decoding the first beginning information and the second beginning information using the predetermined method, respectively, may differ from each other by at least two bits, when the number of corresponding bits is the maximum.

The first beginning information may be one of "01011111111110000" and the inverted pattern thereof. The second beginning information may be one of "10011111111110000" and the inverted pattern thereof.

The first piece of data may include video data and audio data. The second piece of data may include sub-code data.

According to another aspect of the present invention, an information processing method is provided including a time-division multiplexing step of time-division multiplexing data concerning a first video signal. In an adding step, beginning information indicating the beginning of the data, which is time-division multiplexed in the time-division multiplexing step, is added to the data. A bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.

According to another aspect of the present invention, a recording medium having a computer readable program recorded thereon is provided. The program includes a time-division multiplexing step of time-division multiplexing data concerning a first video signal. In an adding step, beginning information indicating the beginning of the data, which is time-division multiplexed in the time-division multiplexing step, is added to the data. A bit string obtained by decoding the beginning information using a predetermined method differs by at least two bits from two types of bit strings obtained by decoding, using the predetermined method; two types of information indicating the beginning of a plurality of pieces of data concerning a second video signal, when the number of corresponding bits is the maximum.

According to an information processing apparatus, an information processing method, and a program recorded on a recording medium of the present invention, data concerning a first video signal is time-division multiplexed, and beginning information indicating the beginning of a packet is added to the time-division multiplexed data. A bit string obtained by decoding the added beginning information using a predetermined method differs by at least two bits from two types of bit strings obtained by decoding, using the predetermined method, two types of information indicating the beginning of a plurality of pieces of data concerning a second video signal, when the number of corresponding bits is the maximum. It is therefore possible to prevent erroneous detection of a sync pattern indicating the head of a packet. Hence, it is possible to correctly discriminate between data described using a standard definition (SD) system and data described using a high definition (HD) system and to process the data respectively.

### BRIEF DESCRIPTION OF THE DRAWINGS

For a better understanding of the present invention, reference will now be made by way of example to the accompanying drawings in which:
Fig. 1 illustrates the structure of a packet;
Figs. 2A and 2B illustrate sync patterns in a conventional SD signal and received sync patterns corresponding to the sync patterns;
Fig. 3 illustrates the received sync patterns in the conventional SD signal;
Fig. 4 is a block diagram of the structure of a videocassette recorder (VCR);
Fig. 5 is a block diagram of the detailed structure of a channel coding unit shown in Fig. 4;
Figs. 6A is a block diagram of the detailed structure of a PR4 precoder shown in Fig. 5, and Fig. 6B is a block diagram of the detailed structure of a PR4 decoder shown in Fig. 5;
Figs. 7A and 7B illustrate sync patterns added to HD data and received sync patterns decoded by the PR4 decoder;
Figs. 8A and 8B illustrate received sync patterns corresponding to the sync patterns shown in Figs. 7A and 7B, and Figs. 8C and 8D illustrate the received sync patterns in the SD signal shown in Fig. 3; and
Fig. 9 is a block diagram of another example of the structure of the channel coding unit.

### DESCRIPTION OF ILLUSTRATIVE EMBODIMENTS

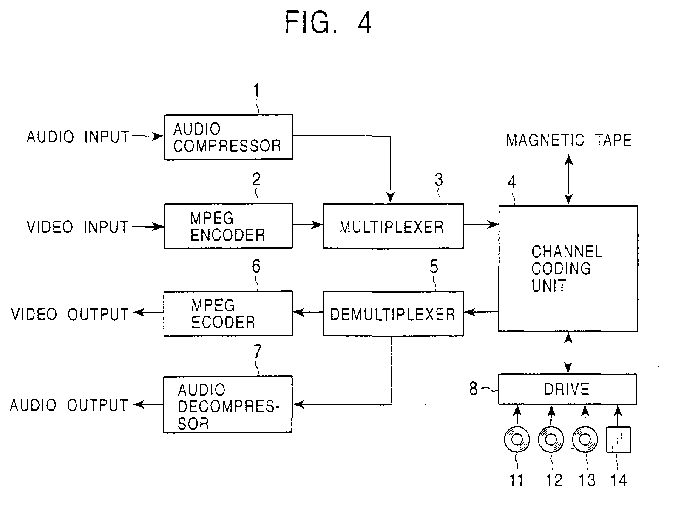

Fig. 4 shows the structure of a videocassette recorder (VCR). An audio compressor 1 receives audio data from, for example, a tuner (not shown), compresses the data at a predetermined data rate, and supplies the data to a multiplexer 3. An MPEG (Moving Picture Experts Group) encoder 2 receives video data from, for example, a tuner (not shown), compresses the data according to the MPEG standard, and supplies the data to the multiplexer 3. The multiplexer 3 receives the compressed audio data and the compressed video data, performs time-division multiplexing of the data, and outputs the data to a channel coding unit 4.

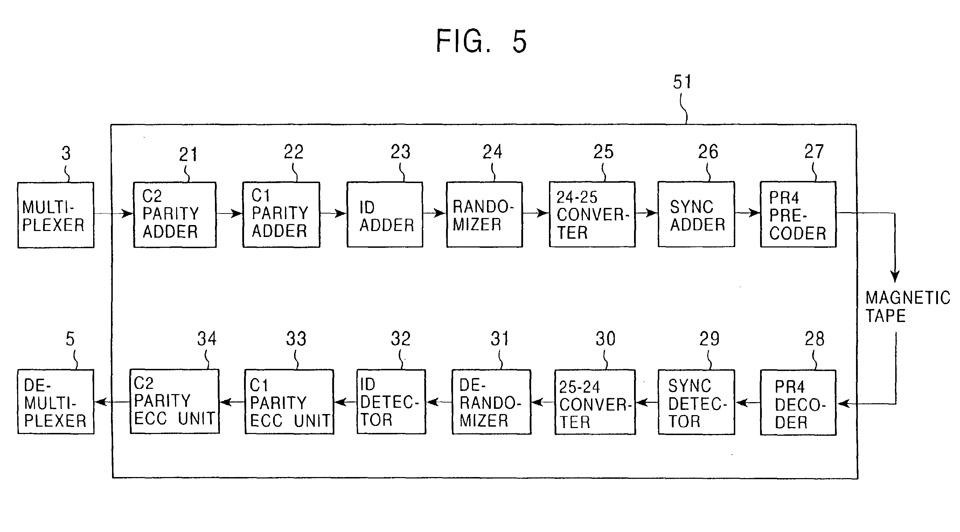

The channel coding unit 4 adds sync data, an ID, and parity bits to the time-division multiplexed data. The channel coding unit 4 generates packets by performing randomizing, 24-25 conversion, and PR4 precoding. The packets are recorded on a recording medium such as a magnetic tape. The channel coding unit 4 receives data from a magnetic tape or the like. The channel coding unit 4 reads the packets by performing PR4 decoding, 25-24 conversion, derandomizing, detecting the sync pattern and the ID, and performing error correction. The channel coding unit 4 supplies the read packets to a demultiplexer 5. A packet generation process and a packet reading process performed by the channel coding unit 4 are described in detail with reference to Fig. 5 hereinafter.

The demultiplexer 5 separates a packet from the channel coding unit 4 into video data and audio data. The demultiplexer 5 outputs the video data to an MPEG decoder 6 and outputs the audio data to an audio decompressor 7. The MPEG decoder 6 decodes the input video data, outputs the decoded data as video output, and displays the video data on a monitor (not shown) or the like. The audio decompressor 7 decompresses the input audio data, outputs the decompressed data as audio output, and causes a speaker (not shown) to output the audio data.

A drive 8 is connected to the channel coding unit 4. The drive 8 transmits to and receives data from a magnetic disk 11, an optical disk 12, a magneto-optical disk 13, and a semiconductor memory 14 which are inserted therein when necessary.

Fig. 5 shows the detailed structure of a section of the channel coding unit 4, which performs the packet generation process and the packet reading process.

A time-division multiplexed signal input from the multiplexer 3 is supplied to a C2 parity adder 21. The C2 parity adder 21 adds a C2 parity, which is an error correction code described with reference to Fig. 1, to the input data and outputs the data to a C1 parity adder 22. The C1 parity adder 22 adds a C1 parity, which is an error correction code described with reference to Fig. 1, to the input data and outputs the data to an ID adder 23. The ID adder 23 adds an ID which includes address information on the data, which is required for recording and reading the data and which is described with reference to Fig. 1, to the input data and outputs the data to a randomizer 24.

When reading highly correlated data such as audio data, it is difficult to extract a clock from the data. The randomizer 24 performs randomizing by computing, in packet units, the exclusive-OR of the input data and, for example, a random sequence represented by an M-sequence, and outputs the result to a 24-25 converter 25. The 24-25 converter 25 adds an extra bit to every 24 bits in order to prevent consecutive 0's or l's from occurring in generated data and to generate pilot data for performing tracking when reading the data. The 24-25 converter 25 outputs the resulting data to a sync adder 26.

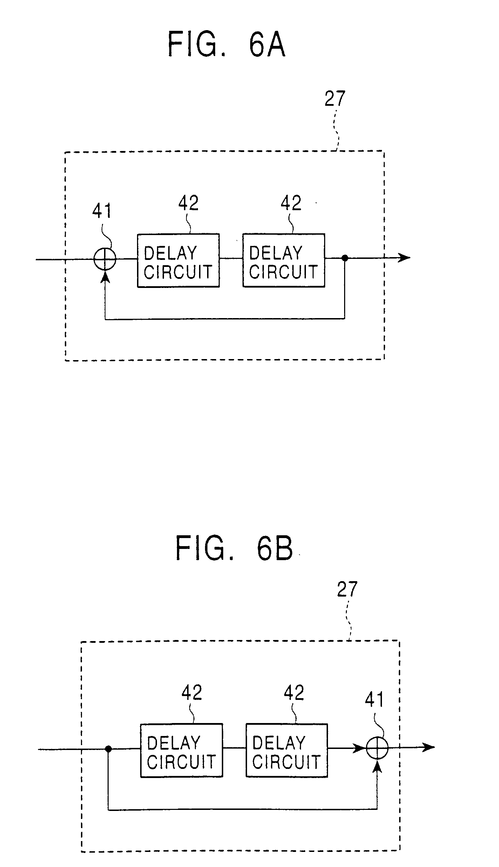

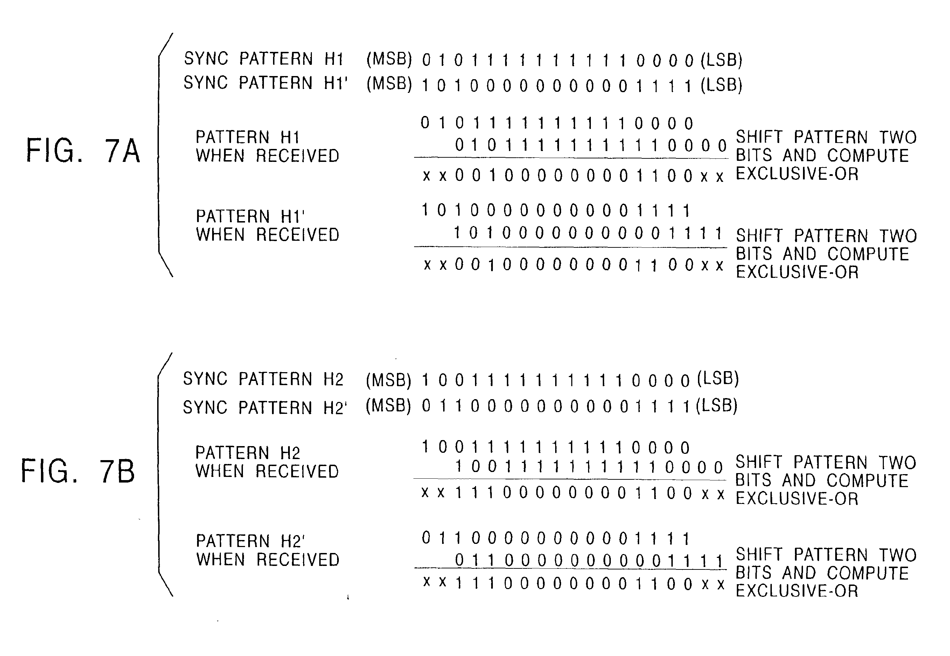

The sync adder 26 adds a sync, which will be described hereinafter using Fig. 7, to the head of the input data and outputs the data to a PR4 precoder 27. The PR4 precoder 27 performs PR4 precoding of the input data. The PR4 precoding is a data processing method using Interleaved Non-return to Zero Inverting (I-NRZI). Referring to Fig. 6A, I-NRZI is performed by computing, using an exclusive-OR circuit 41, the exclusive-OR of input data and data which is delayed two bits by using two delay circuits 42. Since a sync pattern is a precoded pattern, the PR4 precoder 27 performs PR4 precoding of data excluding the sync pattern portion. The PR4-precoded data is recorded on, for example, a magnetic tape or the like.

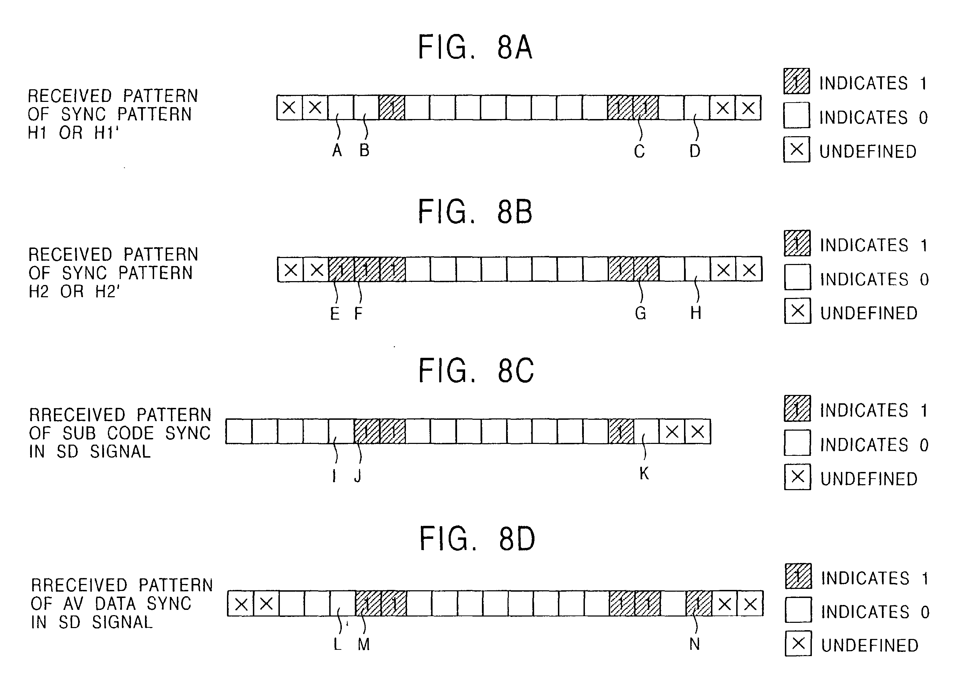

Fig. 6B shows the circuit configuration of a PR4 decoder 28. The PR4 decoder 28 receives data from a magnetic tape or the like. As shown in Fig. 6B, the PR4 decoder 28 performs the inverse of the PR4 precoding illustrated in Fig. 6A, that is, performs the inverse bit delaying processing and exclusive-OR operation. In doing so, the PR4 decoder 28 performs PR4 decoding of the data and outputs the decoded data to a sync detector 29. The sync detector 29 detects a received sync pattern (which will be described hereinafter with reference to Figs. 7A and 7B and Figs. 8A to 8D), which is a predetermined bit string, and outputs the detected sync pattern to a 25-24 converter 30. Based on the position corresponding to the head of a packet indicated by the sync pattern detected by the sync detector 29, the 25-24 converter 30 removes the extra bit added by the 24-25 converter 25, converts the 25-bit data into 24-bit data, and outputs the 24-bit data to a derandomizer 31.

The derandomizer 31 uses a random code, which is identical to that used by the randomizer 24 in ranomizing the data, to derandomize the input data and outputs the data to an ID detector 32. The ID detector 32 detects the ID located next to the sync detected by the sync detector 29 and outputs the ID to a C1 parity error-check-and-correct (ECC) unit 33. The C1 parity ECC unit 33 checks the C1 parity added to the input data, corrects error, and outputs the data to a C2 parity ECC unit 34. The C2 parity ECC unit 34 checks the C2 parity added to the input data, corrects error, and outputs the data to the demultiplexer 5.

Referring to Figs. 7A and 7B, the sync pattern added by the sync adder 26 shown in Fig. 5 to time-division multiplexed HD data, and the received sync pattern detected by the sync detector 29 from the input packet are described. In Figs. 7A and 7B, the symbol "x" indicates undefined data.

When there are two types of time-division multiplexed HD data (for example, when there are a sub-code and AV data), it is necessary to add different sync patterns to the two types of data in order to discriminate between each type of data. For example, when data input to the sync adder 26 is a sub-code, the sync adder 26 adds sync pattern H1 "01011111111110000" or sync pattern H1' "10100000000001111", which is an inverted signal of the sync pattern H1, as shown in Fig. 7A, to the head portion (preceding the ID added by the ID adder 23) of the sub-code packet. Since ten l's or ten 0's occur in succession in the respective sync patterns, it is difficult to erroneously detect normal data as a sync pattern. When data with the sync pattern H1 or the sync pattern H1' is input to the PR4 decoder 28, the PR4 decoder 28 computes the exclusive-OR of the input data and data obtained by delaying the input data two bits. The sync detector 29 detects a bit string "001000000001100". As a result, the sync pattern at the head of the packet in which the sub-code is described is detected.

When data input to the sync adder 26 is AV data, the sync adder 26 adds sync pattern H2 "10011111111110000" or sync pattern H2' "01100000000001111", which is an inverted signal of the sync pattern H2, to the head portion (preceding the ID added by the ID adder 23) of the AV data packet. Since ten 1's or ten 0's occur in succession in the respective sync patterns, it is difficult to erroneously detect normal data as a sync pattern. When data with the sync pattern H2 or the sync pattern H2' is input to the PR4 decoder 28, the PR4 decoder 28 computes the exclusive-OR of the input data and data obtained by delaying the input data two bits. The sync detector 29 detects a bit string "111000000001100". As a result, the sync pattern which is the head of the packet in which the AV code is described is detected.

Unlike the sync patterns D to G in the SD signals shown in Figs. 2A to 2B, the sync patterns H1 and H1' and the sync patterns H2 and H2' are configured so that the difference between the number of bits indicating 1 and the number of bits indicating 0 is equal to each other. This is intended to set frequency characteristics defined by F0, F1, and F2 in a pilot frame generated by the 24-25 converter 25 to be uniform with those in a case in which an SD signal is processed.

Fig. 8A shows a received pattern of the sync pattern H1 or the sync pattern H1'. Fig. 8B shows a received pattern of the sync pattern H2 or the sync pattern H2'. Fig. 8C shows the received pattern of the sub-code sync in the SD signal described using Figs. 2A and 3. Fig. 8D shows the received pattern of the AV code sync in the SD signal described using Figs. 2B and 3.

When the number of corresponding bits is the maximum, the received pattern of the sync pattern H1 or the sync pattern H1' and the received pattern of the sync pattern H2 or the sync pattern H2' are compared with each other. These two received sync patterns differ from each other at two places, namely, the bits indicated by symbols A and B which are 1, and the bits indicated by symbols E and F which are 1. In other words, it is difficult to erroneously detect these bit patterns compared with the two received sync patterns in the SD signal illustrated using Fig. 3.

When the number of corresponding bits is the maximum, the received pattern of the sync pattern H1 or the sync pattern H1' and the received pattern of the sub-code sync in the SD signal are compared with each other. The bit patterns of the two received syncs differ from each other at two places, namely, the bits indicated by symbol B and C and the bits indicated by symbol J and K. When the number of corresponding bits is the maximum, the received pattern of the sync pattern H1 or the sync pattern H1' and the received pattern of the AV data sync in the SD signal are compared with each other. The bit patterns of the two received syncs differ from each other at two places, namely, the bits indicated by B and D and the bits indicated by M and N.

When the number of corresponding bits is the maximum, the received pattern of the sync pattern H2 or the sync pattern H2' and the received pattern of the sub-code sync in the SD signal are compared with each other. The bit patterns of the received syncs differ from each other at two places, namely, the bits indicated by symbols E and G and the bits indicated by symbols I and K. When the number of corresponding bits is the maximum, the received pattern of the sync pattern H2 or the sync pattern H2' and the received pattern of the AV data sync in the SD signal are compared with each other. The bit patterns of the two received syncs differ from each other at two places, namely, the bits indicated by E and H and the bits indicated by L and N.

In other words, the VCR illustrated with reference to Fig. 4 for processing both SD signals and HD signals uses the sync pattern H1 or H1' or the sync pattern H2 or H2' as a bit pattern to be added to an HD signal. Therefore, bit patterns of two types of received syncs differ from each other by two bits according to type of data. It is thus possible to prevent erroneous detection of sync patterns and to correctly detect the head of a packet.

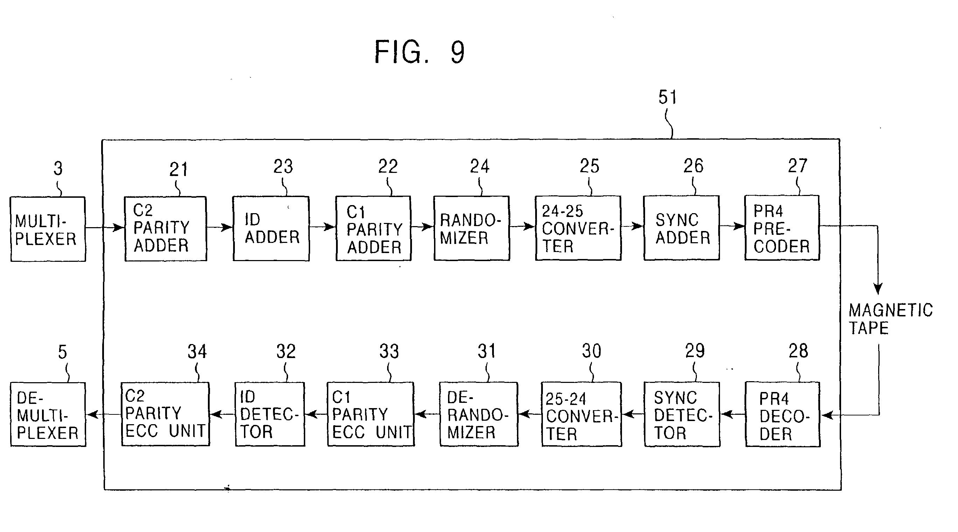

Instead of using the channel coding unit 4 described with reference to Fig. 5, a channel coding unit 51 shown in Fig. 9 can be used. In the channel coding unit 51 shown in Fig. 9, the same reference numerals are given to components corresponding to those in Fig. 4, and repeated descriptions of the common portions are omitted. In other words, the channel coding unit 51 shown in Fig. 9 basically has the same structure as the channel coding unit 4 shown in Fig. 5 except for the fact that the positions of the ID adder 23 and the C1 parity adder 22 are reversed and that the positions of the C1 parity ECC unit 33 and the ID detector 32 are reversed.

In the channel coding unit 51 shown in Fig. 9, the C1 parity covers both the ID and the data. In such a case, the sync adder 26 adds one of the sync patterns H1 and the sync pattern H1' or adds one of the sync pattern H2 and the sync pattern H2', which are shown in Figs. 7A, 7B, 8A, and 8B, to an HD signal in accordance with type of data. In this way, the sync detector 29 can correctly detect a sync pattern which is the head of a packet regardless of whether an input signal is an SD signal or an HD signal.

The above processing can be performed by software. A software program is installed from a recording medium in a computer incorporated in dedicated hardware or in a general-purpose personal computer capable of executing various functions by installing various programs.

The recording medium includes, as shown in Fig. 4, packaged media distributed separately from a computer in order to provide users with a program. The packaged media, which have a program recorded thereon, include a magnetic disk 11 (including a floppy disk), an optical disk 12 (including a compact-disk read only memory (CD-ROM) and a digital versatile disk (DVD)), a magneto-optical disk 13 (including a mini-disk (MD)), and a semiconductor memory 14.

In the present description, steps for writing a program recorded in a recording medium not only include time-series processing performed in accordance with the described order but also include parallel or individual processing, which may not necessarily be performed in time series.

## Claims

1. An information processing apparatus comprising:
time-division multiplexing means for time-division multiplexing data concerning a first video signal; and
adding means for adding beginning information to the data which is time-division multiplexed by said time-division multiplexing means, the beginning information indicating the beginning of the data;
wherein a bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.

2. An information processing apparatus according to Claim 1, wherein a difference between the number of bits indicating 1 and the number of bits indicating 0 in the beginning information is equal to a difference between the number of bits indicating 1 and the number of bits indicating 0, respectively, in the two types of information indicating the beginning of said plurality of pieces of data concerning the second video signal.

3. An information processing apparatus according to Claim 1, wherein the beginning information includes one of "01011111111110000" and the inverted pattern thereof or one of "10011111111110000" and the inverted pattern thereof.

4. An information processing apparatus according to Claim 1, wherein:
the first video signal is a high-definition video signal; and
the second video signal is a standard-definition video signal.

5. An information processing apparatus according to Claim 1, wherein:
said time-division multiplexing means performs time-division multiplexing of a plurality of pieces of data concerning the first video signal and an audio signal;
said adding means adds first beginning information to the head of a first piece of said plurality of pieces of data multiplexed by said time-division multiplexing means, the first beginning information indicating the beginning of the first piece of data;
said adding means adds second beginning information to the head of a second piece of said plurality of pieces of data, the second beginning information indicating the beginning of the second piece of data; and
a first bit string and a second bit string, which are obtained by decoding the first beginning information and the second beginning information using the predetermined method, respectively, differ from each other by at least two bits, when the number of corresponding bits is the maximum.

6. An information processing apparatus according to Claim 5, wherein:
the first beginning information is one of "01011111111110000" and the inverted pattern thereof; and
the second beginning information is one of "10011111111110000" and the inverted pattern thereof.

7. An information processing apparatus according to Claim 5, wherein:
the first piece of data includes video data and audio data; and
the second piece of data includes sub-code data.

8. An information processing method comprising:
a time-division multiplexing step of time-division multiplexing data concerning a first video signal; and
an adding step of adding beginning information to the data which is time-division multiplexed in said time-division multiplexing step, the beginning information indicating the beginning of the data;
wherein a bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.

9. A recording medium having a computer readable program recorded thereon, the program comprising:
a time-division multiplexing step of time-division multiplexing data concerning a first video signal; and
an adding step of adding beginning information to the data which is time-division multiplexed in said time-division multiplexing step, the beginning information indicating the beginning of the data;
wherein a bit string obtained by decoding the beginning information using a predetermined method differs by at least two bits from two types of bit strings obtained by decoding, using the predetermined method, two types of information indicating the beginning of a plurality of pieces of data concerning a second video signal, when the number of corresponding bits is the maximum.
